## Europäisches Patentamt
## European Patent Office
## Office européen des brevets

(19)

(11) Veröffentlichungsnummer: **0 045 468**
**B1**

(12)

# EUROPÄISCHE PATENTSCHRIFT

(45) Veröffentlichungstag der Patentschrift:
**31.10.84**

(51) Int. Cl.³: **H 02 J 9/06,** H 02 M 5/45,
H 02 P 7/62

(21) Anmeldenummer: **81105928.6**

(22) Anmeldetag: **27.07.81**

(54) Einrichtung zur Überbrückung von kurzzeitigen Netzausfällen bei Spannungszwischenkreis-Umrichtern.

(30) Priorität: **01.08.80 DE 3029358**

(43) Veröffentlichungstag der Anmeldung:
**10.02.82 Patentblatt 82/6**

(45) Bekanntmachung des Hinweises auf die Patenterteilung:
**31.10.84 Patentblatt 84/44**

(84) Benannte Vertragsstaaten:
**BE CH DE FR GB IT LI NL SE**

(56) Entgegenhaltungen:
**DE - B - 2 726 534**

**SIEMENS ZEITSCHRIFT, Band 48, Nr. 6, Juni 1974,
Seiten 433-438 Erlangen, DE. H. KRAICAR et al.:
"Leistungsgepufferte
SIMOVERT-Zwischenkreisumrichter für
unterbrechungsfreie Produktion in der
Chemiefaserindustrie"
SIEMENS ZEITSCHRIFT, Band 41, Nr. 2, Februar 1967,
Seiten 133-138 Erlangen, DE. U. SCHEIDER et al.:
"Zwischenkreisumrichter mit Thyristoren zur
Drehzahlsteuerung von Mehrmotorenantrieben"
SIEMENS POWER ENGINEERING, Band 1, Nr. 4, April
1979, Seiten 107-110 Berlin, DE. K. HUEBNER et al.:"A
new family of SIMOVERT variable and constant voltage
D.C. Link converters"**

(73) Patentinhaber: **Siemens Aktiengesellschaft, Berlin und
München Wittelsbacherplatz 2, D-8000 München 2 (DE)**

(72) Erfinder: **Krampe, Dieter, Goldwitzerstrasse 50,
D-8524 Neunkirchen/Brand (DE)**
Erfinder: **Schneider, Hans-Peter, Schulstrasse 18,
D-8522 Herzogenaurach (DE)**
Erfinder: **Zander, Hans-Hermann, Dipl.-Ing., Würzburger
Ring 86, D-8520 Erlangen (DE)**

## Beschreibung

Die Erfindung bezieht sich auf eine Einrichtung zur Überbrückung von Netzausfällen bei Spannungszwischenkreis-Umrichtern, bei der durch Verringern der Frequenz des Umrichters die kinetische Energie der in und an den gespeisten Motoren vorhandenen Massenträgheiten in elektrische Energie zurückführbar ist.

Unter Spannungszwischenkreis-Umrichtern sollen im vorliegenden Fall nicht nur Umrichter mit gesteuerten Gleichrichter im Eingang, sondern auch Umrichter mit Gleichstromsteller im Eingang und Umrichter mit pulsbreitenmodulierter Wechselrichtersteuerung verstanden werden.

Spannungszwischenkreis-Umrichter sind ausführlich in der Siemens Druckschrift E 319/1150 beschrieben, die einen erweiterten Sonderdruck aus der Zeitschrift »Siemens Energietechnik«, 1. Jahrgang, Heft 4, April 1979 darstellt.

Bei einer Reihe von Arbeitsmaschinen, wie z. B. in der Chemiefaser- und Hohlglasindustrie, muß die Produktion auch bei kurzzeitigem Netzausfall kontinuierlich aufrechterhalten werden. Wesentlich ist dabei vor allem, daß die vom Umrichter gespeisten Antriebe während der Netzausfallzeit nicht außer Tritt fallen bzw. kippen.

Es ist bereits bekannt, zur Energieüberbrückung bei kurzzeitigen Netzausfällen einen Kondensatorpuffer im Zwischenkreis des Umrichters vorzusehen (vgl. z. B. DE-PS 2 051 765). Mit diesem Verfahren sind Netzausfallzeiten bis über 500 Millisekunden praktisch ausgeführt worden. Pufferanordnungen dieser Art haben sich bewährt, nachteilig ist jedoch, daß die zulässige Absenkung der Zwischenkreisspannung bei Netzausfall mit Rücksicht auf die Kippmomente der Motoren nur in engen Grenzen möglich ist und der Kostenaufwand für den kapazitiven Speicher relativ hoch ist.

Für größere Ausfallzeiten wäre eine kinetische Pufferung vorteilhaft, z. B. durch einen am Netz mitlaufenden Generator mit Massenträgheit oder durch Ausnutzung der in den angetriebenen Motoren und der Last gespeicherten kinetischen Energie.

Die technologischen Voraussetzungen für den letzteren Fall sind, daß die Arbeitsmaschine mit ihrem Antriebssystem (Motoren und Last) über ein nennenswertes Trägheitsmoment verfügt und daß der technologische Vorgang eine Absenkung der Frequenz während der Netzausfallphase zuläßt.

Bei bisherigen Versuchen in dieser Richtung (vgl. z. B. DE-PS 1 513 517) wurde die Frequenz nach einer vorgegebenen Steuerfunktion abgesenkt. Dies hatte den Nachteil, daß die empirisch eingestellte Frequenzabsenkung bei wechselndem Trägheitsmoment, z. B. durch Ab- und Zuschalten von Motoren und bei unterschiedlichen Geschwindigkeitsniveau zu unzulässigen Verhältnissen führte; war z. B. die generatorische Rückspeisung der Motoren zu gering, so schaltete der Umrichter wegen Energiemangel ab, waren andererseits die Rückspeisungen zu stark, so bestand die Gefahr der Energieüberladung und der Umrichter mußte durch seine Schutzeinrichtungen abgeschaltet werden. Aufgrund dieser Nachteile konnte die kinetische Pufferung nur sehr bedingt eingesetzt werden.

Die Aufgabe der vorliegenden Erfindung besteht darin, eine in einem weiten Stellbereich zuverlässig arbeitende kinetische Pufferung zu schaffen.

Diese Aufgabe wird erfindungsgemäß bei einer Einrichtung der eingangs genannten Art gemäß dem kennzeichnenden Teil des Hauptanspruches gelöst.

Auf diese Weise entsteht infolge der im System vorhandenen Verluste ein stabiler Regelkreis, über den durch das geregelte Abfahren der Frequenz bei übersynchronem Betrieb der Motoren die kinetische Energie der Antriebe gezielt in den Umrichter zurückgegeben werden kann.

Vorteilhafterweise wird dabei durch den Regler eine Frequenzverminderung erzeugt, die etwas kleiner als die zum Ausgleich erforderliche Frequenzabsenkung gewählt ist. Dieser Effekt wird dadurch erzielt, daß der Regler eine Statik erhält. Die im Zwischenkreiskondensator des Umrichtersystems gespeicherte Energie wird dadurch noch anteilig ausgenutzt. Hierdurch wird andererseits auch die Frequenzabsenkung während eines Netzausfalls so klein wie möglich gehalten.

Schaltungstechnisch wird der Regler vorteilhafterweise als PI-Regler ausgebildet und diesem ein Integrator nachgeschaltet, der dann den Frequenzkorrekturwert für den Frequenzkanal des Wechselrichters erzeugt. Um das Regelsystem während des Netzausfalls ausreichend zu dämpfen, wird ferner zweckmäßigerweise dem Regler und dem Integrator ein Bandpaß parallelgeschaltet.

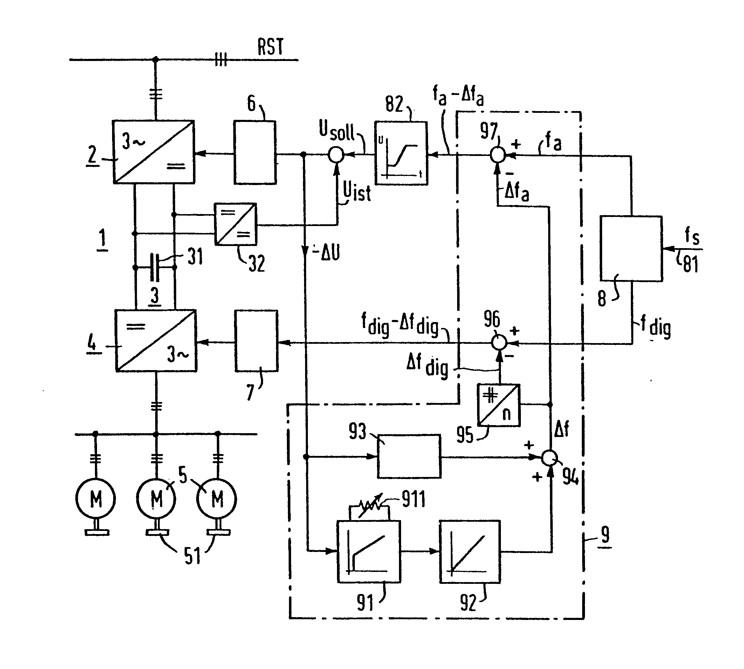

Anhand eines in der Zeichnung dargestellten Ausführungsbeispiels sei die Erfindung näher beschrieben, wobei die Ausführungen nicht nur für einen Spannungszwischenkreis-Umrichter mit gesteuertem Gleichrichter am Eingang gelten, sondern sinngemäß auch für andere Ausführungsformen des Spannungszwischenkreis-Umrichters.

Wie aus der Zeichnung ersichtlich, speist ein an ein Drehstromnetz RST von z. B. 50 Hertz und 380 Volt angeschlossener statischer Zwischenkreisumrichter 1 eine Reihe von z. B. Asynchron- oder Synchronmotoren 5 deren Lasten einschließlich Massenträgheitsmoment mit 51 bezeichnet sind. Der Stellbereich für die Ausgangsfrequenz des Umrichters 1 möge dabei im Bereich zwischen 50 und 200 Hertz liegen.

Der statische Umrichter 1 besteht im wesentlichen aus einem steuerbaren Gleichrichter 2 (netzgeführter Stromrichter), dem nachgeschalteten Gleichspannungszwischenkreis 3 mit parallel angeordnetem Zwischenkreiskondensator 31 und dem Wechselrichter 4 (selbstgeführter Stromrichter). Die im Zwischenkreis vorliegende Gleichspannung $U_{ist}$ wird über einen Potential-trenner 32 dem Spannungsregler zugeführt. Dieser regelt durch entsprechenden Eingriff in den Gleichrichter 2 die Zwischenkreisspannung aus. Die Ausgangsfrequenz des Wechselrichters 4 ist durch eine Frequenzsteuereinrichtung 7 festgelegt. Die digitale Steuerfrequenz $f_{dig}$ für die Frequenzsteuereinrichtung 7 wird von einem Frequenzgeber 8 erzeugt, der analog oder digital ausgebildet sein kann. Entsprechend — Bezugszeichen 81 — wird die Sollfrequenz $f_{soll}$ durch ein analoges Signal z. B. über Potentiometer oder durch binäres Signal z. B. über Dekadenschalter vorgegeben. Aus dem vorgegebenen Frequenzsollwert wird auch ein frequenzproportionales analoges Signal fa erzeugt, das als Führungsgröße über einen Funktionsgeber 82 den Sollwert $U_{soll}$ für die Spannungsregeleinrichtung 6 liefert. Auf diese Weise wird bei einer Änderung des vorgegebenen Sollwertes der Frequenz auch die Spannung entsprechend nachgeführt, wobei die jeweilige Relation zwischen Spannung und Frequenz, das sogenannte $U/f$-Verhältnis im einzelnen noch durch den Funktionsgeber 82 modifizierbar ist.

Die mit Arbeitsgeschwindigkeit laufende Produktionsmaschine besitzt eine durch die Summe der Trägheitsmomente der Motoren 5 samt Lasten 51 bestimmten kinetischen Energiezustand. Die einzelnen Antriebsmotoren laufen mit synchroner bzw. asynchroner Drehzahl entsprechend ihrer Polpaarzahl proportional zur eingespeisten Frequenz des Umrichters. Der momentenbildende Fluß in den Motoren wird in dem interessierenden Stellbereich durch die frequenzproportionale Spannungsversorgung sichergestellt. Tritt ein Netzausfall ein, so kann durch Herabregeln der Umrichterfrequenz die Drehzahl der Motoren 5 übersynchron gemacht werden; damit arbeiten die Motoren generatorisch und sind in der Lage, Energie zur Deckung des Arbeitsprozesses, der eigenen Verluste und der Umrichterverluste freizusetzen.

Durch den Spannungszwischenkreis 3 mit dem Kondensator 31 ist der Wechselrichter 4 vom zusammengebrochenen Netz entkoppelt, d. h. unabhängig. Die für die generatorisch arbeitenden Motoren 5 erforderliche Gegenspannung bildet sich im Kondensator 31 auch bei Netzausfall.

Die Höhe der Zwischenkreisspannung, die multipliziert mit einem Faktor der Ausgangsspannung des Wechselrichters entspricht, ist ein Abbild des Energiegleichgewichtes zwischen Verbrauch und Angebot; d. h. bezogen auf einen bestimmten Arbeitspunkt von z. B. f = 100 Hertz und U = 500 Volt ist der Energiehaushalt ausgeglichen, wenn das Spannungsfrequenzverhältnis von z. B. 5 Volt pro Hertz im vorliegenden Fall auch bei Frequenzabsenkung erhalten bleibt.

Die Anlagenverhältnisse, d. h. die vorhandenen Trägheitsmomente und die technologischen Betriebsbedingungen, wie z. B. das Drehzahlniveau und der Stellbereich lassen z. B. bei Chemiefaserantrieben und ähnlichen Antriebskonfigurationen Pufferzeiten im Sekundenbereich zu. Quantitativ gesehen, können bei Drehzahlabsen-kungen im Prozentbereich bereits Netzausfall-zeiten von $\geq$ 500 ms ohne Schwierigkeiten überbrückt werden.

Um dabei die Störgrößen unterschiedliches Trägheitsmoment, unterschiedliches Drehzahlniveau usw. auszuschalten, muß der Frequenzeingriff geregelt vorgenommen werden, und zwar nach Maßgabe des Energiehaushaltes im Spannungszwischenkreis. Hierbei gilt der Regelsinn, daß bei einem Abfall der Istspannung im Zwischenkreis gegenüber dem vorgegebenen Sollwert die Frequenz abgesenkt werden muß, und zwar in dem Maße, daß die Energiebilanz ausgeglichen wird.

Hierzu ist die zusätzliche Einrichtung 9 — gestrichelt umrandet — vorgesehen. Sie besteht im wesentlichen aus einem PI-Regler 91, dem ein der Regelabweichung $\varDelta U$ zwischen Sollwert $U_{soll}$ und Istwert der Zwischenkreisspannung proportionaler Wert zugeführt wird. An die Stelle der entsprechenden Zwischenkreisspannungen könnten auch die Ausgangsspannungen des Wechselrichters 4 treten, die sich nur durch einen Formfaktor von der Spannung im Zwischenkreis unterscheiden. An den Regler 91 ist ein Integrator 92 angeschlossen, der über einen Spannungsfrequenzumsetzer 95 den Frequenzkorrek-turwert $\varDelta f_{dig}$ für die Steuerfrequenz $f_{dig}$ liefert. In einem Pulsmischgatter 96, das in bekannter Weise aus Ringzählern oder dergleichen aufgebaut sein kann, wird die digital vorgegebene Steuer-frequenz $f_{dig}$ entsprechend korrigiert. Gleichzeitig wird auch der zugeordnete frequenzproportionale Wert fa an der Additionsstelle 97 um den Wert $\varDelta$ fa korrigiert und damit die Sollspannung $U_{soll}$ entsprechend abgesenkt.

Um den Regelkreis ausreichend zu dämpfen, ist Regler 91 und Integrator 92 noch ein Bandpaß 93 parallelgeschaltet, dessen Ausgangssignal in der Additionsstelle 94 zum Ausgangssignal des Integrators 92 addiert wird.

Im nachfolgenden sei die Funktion der Einrichtung 9 bei Netzausfall näher beschrieben:

Nach dem Netzausfall arbeitet der selbstgeführte Wechselrichter 4 zunächst mit unveränderter Frequenz weiter. Hierdurch entlädt sich der Zwischenkreis 3, d. h. es bildet sich eine Ab-weichung $\varDelta u$, die am Eingang des $df/_{dt}$-Reglers 91 liegt. Über den nachgeschalteten Integrator 92 wird der Korrekturwert $\varDelta f$ gebildet und auf das Pulsmischgatter 96 im Sinne einer Frequenzreduzierung aufgeschaltet. Die Frequenzreduzierung läßt die Motoren übersynchron laufen und es kommt zur generatorischen Rückspeisung in den Zwischenkreis 3. Als Folge baut sich die Zwischenkreisspannung wieder auf; das Spannungsfrequenzverhältnis stabilisiert sich, und zwar entsprechend dem Wert der nunmehr frequenzabhängig reduzierten Soll-wertspannung $U_{soll}$.

Der vorstehend beschriebene Vorgang wiederholt sich nun fortlaufend in einer geschlossenen Regelschleife, wobei der Frequenzabsenkungseingriff immer nach dem Prinzip des Spannungsabgleiches, d. h. der ausgeglichenen Energiebilanz vorgenommen wird.

Um im Pufferfall noch zusätzlich den Energiehaushalt zu entlasten, d. h. einerseits die im Zwischenkreis 3 gespeicherte Energie teilweise freizusetzen und andererseits die Magnetisierungsverluste in den Motoren 5 zu reduzieren, erhält der Regler 91 eine derartige Statik 911, d. h. Rückführung, daß zwischen Spannungsistwert und Spannungssollwert eine Proportionalabweichung einstellbar ist; d. h. es wird eine Absenkung des Spannungsfrequenzverhältnisses während der Frequenzverminderung vorgenommen.

Kehrt die Netzspannung wieder, so läuft der Integrator 92 wieder in seine Nullage zurück; d. h. der Umrichter wird wieder mit der ursprünglich eingestellten Frequenz betrieben.

**Patentansprüche**

1. Einrichtung zur Überbrückung von Netzausfällen bei einem Spannungszwischenkreis-Umrichter, bei der durch Verringern der Frequenz des Umrichters die kinetische Energie der in und an den Motoren vorhandenen Massenträgheiten in elektrische Energie zurückführbar ist, dadurch gekennzeichnet, daß die Regelabweichung ($\Delta$u) zwischen dem frequenzabhängig geführten Sollwert ($U_{soll}$) und dem Istwert ($U_{ist}$) der Umrichterausgang- bzw. Zwischenkreisspannung einem Regler (91) zugeführt ist, der die Steuerfrequenz des Umrichters und den ihr zugeordneten Spannungssollwert ($U_{soll}$) im Sinne einer Verringerung der Regelabweichung ($\Delta$u) fortlaufend vermindert.

2. Einrichtung nach Anspruch 1, dadurch gekennzeichnet, daß durch den Regler (91) eine Frequenzverminderung erzeugbar ist, die etwas kleiner als die zum Ausgleich erforderliche Frequenzabsenkung gewählt ist.

3. Einrichtung nach Anspruch 1, dadurch gekennzeichnet, daß dem als PI-Regler ausgebildeten Regler (91) ein Integrator (92) nachgeschaltet ist, der einen Frequenzkorrekturwert erzeugt und auf den Frequenzsteuerkanal des Wechselrichters (4) gibt.

4. Einrichtung nach Anspruch 3, dadurch gekennzeichnet, daß dem Regler (91) und Integrator (92) ein Bandpaß (93) zur Bedämpfung des Regelkreises während des Netzausfalls parallelgeschaltet ist.

**Claims**

1. Device for bridging mains failures in a voltage intermediate circuit static frequency changer, by means of which, by reducing the frequency of the frequency changer, the kinetic energy of the inertias present in and associated with the motors can be restored to electrical energy, characterised in that the difference ($\Delta$u) between the desired value ($U_{soll}$) supplied in dependence on frequency, and the actual value ($U_{ist}$), of the frequency changer output voltage or respectively the intermediate circuit voltage is fed to a controller (91) which continuously reduces the control frequency of the frequency changer and the desired voltage value ($U_{soll}$) associated with it in the sense of a reduction in the difference ($\Delta$u).

2. Device according to claim 1, characterised in that a reduction in frequency can be produced by the controller (91), which reduction is selected to be somewhat smaller than the drop in frequency necessary for the purpose of achieving equilibrium.

3. Device according to claim 1, characterised in that an integrator (92) is connected subsequent to the controller (91) designed as a PI controller, which integrator produces a frequency correction value and transmits it to the frequency control channel of the inverter (4).

4. Device according to claim 3, characterised in that a band-pass filter (93) is connected parallel to the controller (91) and integrator (92) for the purpose of damping the control circuit during the mains failure.

**Revendications**

1. Dispositif pour remédier à des défaillances du réseau dans des convertisseurs de tension à circuit intermédiaire, dans lequel l'énergie cinétique des inerties de masse présente dans et sur des moteurs peut être reconvertie en énergie électrique par réduction de la fréquence du convertisseur, caractérisé par le fait que l'écart de réglage ($\Delta$u) entre la valeur de consigne ($U_{consigne}$) réglée en fonction de la tension et la valeur réelle ($U_{réelle}$) de la tension de la sortie du convertisseur ou du circuit intermédiaire est envoyé à un régulateur (91) qui réduit de façon continue la fréquence de commande du convertisseur et la valeur de consigne de la tension ($U_{consigne}$), qui lui est associée, dans le sens d'une réduction de l'écart de réglage ($\Delta$u).

2. Dispositif suivant la revendication 1, caractérisé par le fait qu'au moyen du régulateur (91) ou peut obtenir une réduction de la fréquence, qui est choisie légèrement inférieure à la diminution de fréquence nécessaire pour l'équilibre.

3. Dispositif suivant la revendication 3, caractérisé par le fait qu'en aval du régulateur (40) réalisé sous la forme d'un régulateur à action proportionnelle et intégrale se trouve branché un intégrateur (92) quiproduit une valeur de correction de la fréquence et envoie cette dernière dans le canal de commande de la fréquence de l'onduleur (40).

4. Dispositif suivant la revendication 3, caractérisé par le fait qu'un filtre passe-bande (93) servant à amortir le circuit de réglage pendant la défaillance du réseau est branché en parallèle avec le régulateur (91) et avec l'intégrateur (92).

0 045 468